# EUROPEAN PATENT APPLICATION

(11) **EP 2 330 503 A2**
(43) Date of publication of application: **08.06.2011**
(21) Application number: 10090011.7
(22) Date of filing: 30.11.2010
(51) Int. Cl.: G06F 9/445

(54) **Network device capable of remotely updating firmware thereof**

(30) Priority: 01.12.2009 TW 98222462 U
(71) Applicant: inXtron, inc., Taipei County 23141 (TW)
(72) Inventor: Chou, Wen-Chien, Taipei City 10844 (TW)
(74) Representative: Patentanwälte Bressel und Partner

(57) **Abstract**

A network device (100) includes: a memory unit (10) including a buffer memory (12) and a read-only memory (11) that has a device firmware stored therein for execution by the network device (100); a transmission interface unit (20) for establishing connection to a host device (200) via a network (300); a status-indicating unit (40); and a firmware-update control unit (30) configured to retrieve firmware-update data from the host device (200) through the network (300) via the transmission interface unit (20), configured to store the firmware-update data thus retrieved in the buffer memory (12), and configured to update the device firmware in the read-only memory (11) based on the firmware-update data in the buffer memory (12), the firmware-update control unit (30) being further configured to control the status-indicating unit (40) for generating a firmware-update-status output corresponding to a state of a firmware update process performed by the firmware-update control unit (30) for user notification.

## Description

This application claims priority of Taiwanese Application No. 098222462, filed on December 1, 2009.

The present invention relates to network device, more particularly to network device capable of remotely updating firmware thereof.

Conventional network devices, such as network storage devices, network telephones, network routers, and modems, are employed ubiquitously. Generally, to perform firmware update upon these conventional network devices, the network devices need to be delivered to respective service centers. Afterward, the updated conventional network devices need to be returned to their owners. Firmware update of the conventional network devices is thus a time-consuming and labor-intensive process. To eliminate the need to deliver the network devices to the service centers for firmware update, network devices are recently designed to be capable of remotely updating firmware thereof. However, because the network devices typically do not have a built-in display screen, users of the network devices are unable to know whether firmware of the network devices is being updated. Furthermore, remote firmware update of the network devices are generally performed automatically without user confirmation.

Therefore, an object of the present invention is to provide a network device capable of alleviating the aforesaid drawbacks of the network devices of the prior art.

Accordingly, a network device of the present invention includes:
a memory unit including a buffer memory and a read-only memory that has a device firmware stored therein for execution by the network device;
a transmission interface unit for establishing connection to a host device via a network;
a status-indicating unit; and
a firmware-update control unit connected to the memory unit, the transmission interface unit and the status-indicating unit, configured to retrieve firmware-update data from the host device through the network via the transmission interface unit, configured to store the firmware-update data thus retrieved in the buffer memory, and configured to update the device firmware in the read-only memory based on the firmware-update data in the buffer memory,
the firmware-update control unit being further configured to control the status-indicating unit for generating a firmware-update-status output corresponding to a state of a firmware update process performed by the firmware-update control unit for user notification.

Preferably, the network device further includes an update-confirm unit connected to the firmware-update control unit and user-operable to trigger the firmware-update control unit to begin updating the device firmware in the read-only memory based on the firmware-update data in the buffer memory.

Other features and advantages of the present invention will become apparent in the following detailed description of the preferred embodiment with reference to the accompanying drawings, of which:
Figure 1 is a schematic block diagram illustrating the preferred embodiment of a network device of the present invention, a host device, and a network through which a connection between the network device and the host device is established; and
Figure 2 is a schematic diagram illustrating a host device and a plurality of network devices that are connected to the host device.

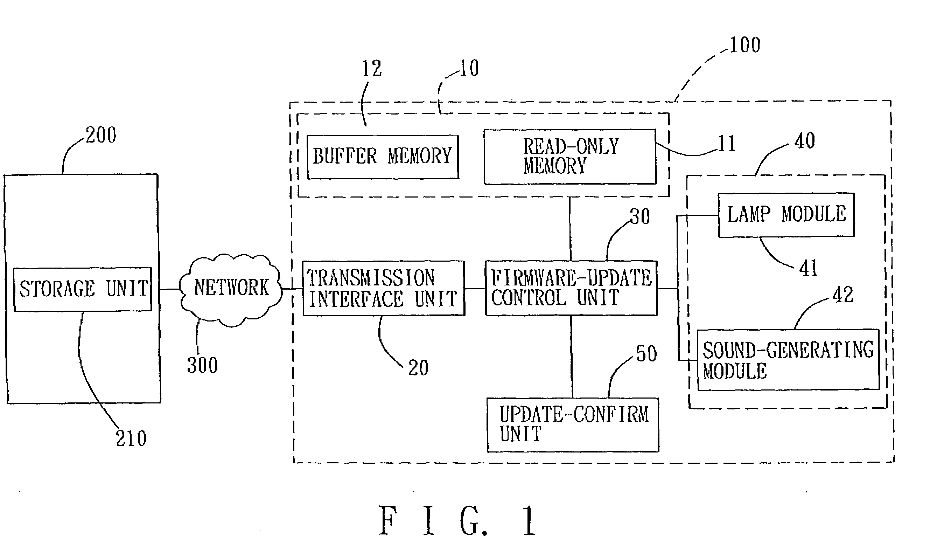

Referring to Figure 1, the preferred embodiment of a network device 100 according to the present invention may be exemplified as one of a network storage device, a network telephone, a network router, and a modem. The network device 100 is preferably one that does not have a built-in display screen, and is configured to retrieve firmware-update data from a host device 200, which, in the present embodiment, is a network server, via a network 300 (e.g., a wide area network). In this embodiment, retrieval of the firmware-update data from the host device 200 by the network device 100 is performed usingTR069, which is a Customer Premises Equipment (CPE) Wide-Area Network (WAN) management protocol.

The network device 100 of the preferred embodiment includes a memory unit 10, a transmission interface unit 20, a firmware-update control unit 30, and a status-indicating unit 40.

The memory unit 10 includes a read-only memory 11 and a buffer memory 12. The read-only memory 11 may be one of an erasable programmable read-only memory, flash read-only memory, and an electrically erasable programmable read-only memory, and has a device firmware stored therein for execution by the network device 100. The device firmware contains device information such as identification number, product model number, and current firmware version. The buffer memory 12, in the present embodiment, is a random access memory for buffering the firmware-update data received from the host device 200 by the network device 100.

The firmware-update control unit 30 is connected to the memory unit 10, the transmission interface unit 20, and the status-indicating unit 40, and is configured to retrieve the firmware-update data from the host device 200 through the network 300 via the transmission interface unit 20, to store the firmware-update data thus retrieved in the buffer memory 12, and to update the device firmware in the read-only memory 11 based on the firmware-update data in the buffer memory 12. The firmware-update control unit 30 is further configured to control the status-indicating unit 40 for generating a firmware-update-status output corresponding to a state of a firmware update process performed by the firmware-update control unit 30 for user notification.

The status-indicating unit 40 includes a lamp module 41 (e.g., at least one light-emitting diode) and a sound-generating module 42 (e.g., a buzzer), and the firmware-update-status signal generated thereby is a combination of a light output emitted by the lamp module 41 and an audible output generated by the sound-generating module 42. However, the status-indicating unit 40 may include only one of the lamp module 41 and the sound-generating module 42 in other embodiments of the invention. In the present embodiment, the firmware-update-status signal has first, second, third, and fourth modes, which are described hereinafter in connection with steps of a firmware update process performed by the firmware-update control unit 30.

When the firmware-update control unit 30 is retrieving the firmware-update data from the host device 200, the firmware-update control unit 30 is configured to control operation of the status-indicating unit 40 such that the light and audible outputs generated thereby are in the first mode. In the first mode, the light output generated by the lamp module 41 is a blinking red light, and the audible output generated by the sound-generating module 42 is a low frequency beeping sound.

When the firmware-update control unit 30 has successfully retrieved the firmware-update data from the host device 200 and has stored the firmware-update data thus retrieved in the buffer memory 12, the firmware-update control unit 30 is configured to control operation of the status-indicating unit 40 such that the light and audible outputs generated thereby are in the second mode. In the second mode, the light output generated by the lamp module 41 is a green light, and the audible output generated by the sound-generating module 42 is a honking sound.

When the firmware-update control unit 30 is updating the device firmware in the read-only memory 11 based on the firmware-update data in the buffer memory 12, the firmware-update control unit 30 is configured to control operation of the status-indicating unit 40 such that the light and audible outputs generated thereby are in the third mode. In the third mode, the light output generated by the lamp module 41 is a blinking blue light, and the audible output generated by the sound-generating module 42 is a high frequency beeping sound.

Finally, when the firmware-update unit 30 has successfully updated the device firmware in the read-only memory 11 based on the firmware-update data in the buffer memory 12, the firmware-update control unit 30 is configured to control operation of the status-indicating unit 40 such that the light and audible outputs generated thereby are in the fourth mode. In the fourth mode, the light output generated by the lamp module 41 is a non-intermittent blue light, and the audible output generated by the sound-generating module 42 is a long beeping sound.

It is worth noting that the firmware-update data received by the network device 100 is not the whole of a latest version of the device firmware, but is a difference between the version of the device firmware in the read-only memory 11 of the network device 100 and the latest version of the device firmware, thereby reducing transmission time.

It is to be noted that the network device 100 of the preferred embodiment further includes an update-confirm unit 50 including a push-button mechanism that is connected to the firmware-update control unit 30 and that is user-operable to trigger the firmware-update control unit 30 to begin updating the device firmware in the read-only memory 11 based on the firmware-update data in the buffer memory 12. It is to be noted that the firmware-update control unit 30 is user-operable only when the firmware-update-status signal is in the second mode.

However, in a modification of the network device 100 according to the present invention, the firmware-update control unit 30 is configured to automatically update the device firmware in the read-only memory 11 based on the firmware-update data in the buffer memory 12 after storing the firmware-update data in the buffer memory 12. Therefore, the update-confirm unit 50 may be omitted in the modification. Furthermore, the firmware-update control unit 30 may be further configured to transmit a request for firmware update to the host device 200 upon establishment of a connection between the host device 200 and the network device 100 over the network 300. Alternatively, the firmware-update control unit 30 may be further configured to transmit a request for firmware update according to a schedule, which may be configured by a user via a computer device that is connected to the network device 100. The request for firmware update includes device information, i.e., identification number, product model number, and current firmware version, of the network device 100. Based on the device information, the host device 200 provides the appropriate firmware-update data to the network device 100 for updating the device firmware in the read-only memory 11 accordingly.

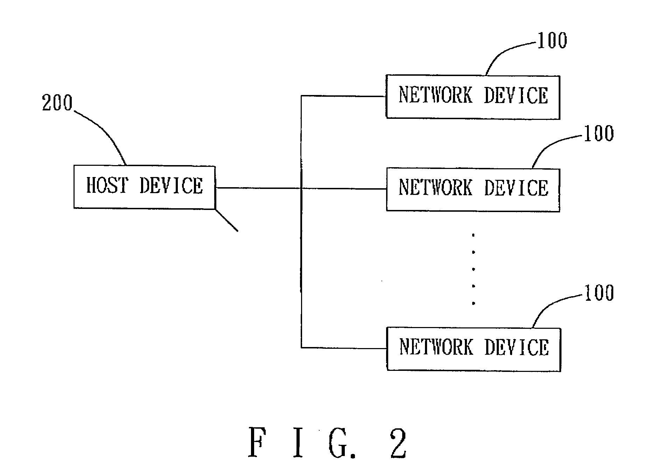

The firmware-update control unit 30 is configured to transmit a response signal to the host device 200 after storing the firmware-update data in the buffer memory 12 or after the device firmware in the read-only memory 11 has been successfully updated based on the firmware-update data in the buffer memory 12. Moreover, the firmware-update control unit 30 is further configured to transmit an update-failure signal to the host device 200 when updating of the device firmware based on the firmware-update data is unsuccessful. Contents of the response signal and the update-failure signal, each of which includes the device information and a result of firmware update performed by the firmware-update control unit 30, are stored in a storage unit 210 of the host device 200, and serve as a reference for handling future requests for firmware update received from the network device 100. Referring to Figure 2, in practice, the host device 200 is able to handle requests for firmware update received from a plurality of network devices 100, which may be respectively identified by their device information and may be respectively updated based upon their current firmware versions.

In summary, the combination of the light output and the audible output generated by the status-indicating unit 40 has first, second, third, and fourth modes for user notification of different states of the firmware update process performed by the firmware-update control unit 30. Furthermore, the push-button mechanism included in the update-confirm unit 50 enables the user to trigger updating of the device firmware in the read-only memory 11 by the firmware-update control unit 30.

While the present invention has been described in connection with what is considered the most practical and preferred embodiment, it is understood that this invention is not limited to the disclosed embodiment but is intended to cover various arrangements included within the spirit and scope of the broadest interpretation so as to encompass all such modifications and equivalent arrangements.

## Claims

1. A network device (100) comprising:
a memory unit (10) including a buffer memory (12) and a read-only memory (11) that has a device firmware stored therein for execution by said network device (100);
a transmission interface unit (20) for establishing connection to a host device (200) via a network (300);
a status-indicating unit (40); and
a firmware-update control unit (30) connected to said memory unit (10), said transmission interface unit (20) and said status-indicating unit (40), configured to retrieve firmware-update data from the host device (200) through the network (300) via said transmission interface unit (20), configured to store the firmware-update data thus retrieved in said buffer memory (12), and configured to update said device firmware in said read-only memory (11) based on the firmware-update data in said buffer memory (12),
said firmware-update control unit (30) being further configured to control said status-indicating unit (40) for generating a firmware-update-status output corresponding to a state of a firmware update process performed by said firmware-update control unit (30) for user notification.

2. The network device (100) as claimed in claim 1, wherein the firmware-update-status output generated by said status-indicating unit (40) has
a first mode that corresponds to said firmware-update control unit (30) retrieving the firmware-update data from the host device (200), and
a second mode that corresponds to said firmware-update control unit (30) having successfully retrieved the firmwaxs-update data from the host device (200), and having stored the firmware-update data thus retrieved in said buffer memory (12).

3. The network device (100) as claimed in claim 2, wherein the firmware-update-status output generated by said status-indicating unit (40) further has
a third mode that corresponds to said firmware-updated control unit (30) updating said device firmware in said read-only memory (11) based on the firmware-update data in said buffer memory (12), and
a fourth mode that corresponds to said firmware-update control unit (30) having successfully updated said device firmware in said read-only memory (11) based on the firmware-update data in said buffer memory (12).

4. The network device (100) as claimed in claim 2, wherein said status-indicating unit (40) includes a lamp module (41), and the firmware-update-status output generated by said status-indicating unit (40) is a light output emitted by said lamp module (41).

5. The network device (100) as claimed in claim 2, wherein said status-indicating unit (40) includes a sound-generating module (42), and the firmware-update-status output generated by said status-indicating unit (40) is an audible output generated by said sound-generating module (42).

6. The network device (100) as claimed in claim 2, wherein said status-indicating unit (40) includes a lamp module (41) and a sound-generating module (42), and the firmware-update-status signal generated by said status-indicating unit (40) is a combination of a light output emitted by said lamp module (41) and an audible output generated by said sound-generating module (42) .

7. The network device (100) as claimed in claim 1, further comprising an update-confirm unit (50) connected to said firmware-update control unit (30) and user-operable to trigger said firmware-update control unit (30) to begin updating said device firmware in said read-only memory (11) based on the firmware-update data in said buffer memory (12).

8. The network device (100) as claimed in claim 7, wherein said update-confirm unit (50) includes a push-button mechanism.

9. The networkdevice (100) as claimed in claim 1, wherein said firmware-update control unit (30) is configured to automatically update said device firmware in said read-only memory (11) based on the firmware-update data after storing the firmware-update data in said buffer memory (12).

10. The network device (100) as claimed in claim 1, wherein said firmware-update control unit (30) is configured to transmit a response signal to the host device (200 through the network (300 via said transmission interface unit (20) after storing the firmware-update data in said buffer memory (12).

11. The network device (100) as claimed in claim 1, wherein said firmware-update control unit (30) is configured to transmit a response signal to the host device (200) through the network (300) via said transmission interface unit (20) after said device firmware in said read-only memory (11) has been successfully updated based on the firmware-update data in said buffer memory (12).

12. The network device (100) as claimed in claim 1, wherein said firmware-update control unit (30) is configured to transmit an update-failure signal to the host device (200) through the network (300) via said transmission interface unit (20) when updating of said device firmware in said read-only memory (11) based on the firmware-update data in said buffer memory (12) is unsuccessful.

13. The network device (100) as claimed in claim 1, which is one of a network storage device, a network telephone, a network router, and a modem.

14. The network device (100) as claimed in claim 1, which is one that does not have a built-in display screen.
